# EUROPÄISCHE PATENTSCHRIFT

(11) **EP 2 835 358 B1**
(45) Veröffentlichungstag und Bekanntmachung des Hinweises auf die Patenterteilung: **10.05.2017**
(21) Anmeldenummer: 14003593.2
(22) Anmeldetag: 19.07.2011
(51) Int. Cl.: C02F 9/00, C02F 1/36, C02F 1/44, C02F 1/18, C02F 1/38, C02F 1/48, C02F 1/46, C02F 1/467, C02F 103/04, C02F 103/02, C02F 1/461, C02F 1/00

(54) **Vorrichtung zur Erzeugung von Reinstwasser mit Umkehrosmose und Enthärter**
Installation for production of ultraclean water by reverse osmosis and softening
Installation pour produire de l'eau ultrapure par osmose inverse et adoucissement

(30) Priorität: 27.08.2010 DE 102010035680; 15.10.2010 DE 102010048616
(43) Veröffentlichungstag der Anmeldung: 11.02.2015
(62) Teilanmeldung aus: 11005886.4
(73) Patentinhaber: Fidica GmbH & Co. KG, 63877 Sailauf (DE)
(72) Erfinder: VÖLKER, Manfred, 63825 Blankenbach (DE)
(74) Vertreter: Flosdorff, Jürgen

(56) Entgegenhaltungen:
- EP-A1- 2 527 303
- EP-A2- 1 902 771
- US-A1- 2004 144 707

## Beschreibung

Die Erfindung betrifft eine Vorrichtung zur Wasseraufbereitung nach dem Prinzip der umgekehrten Osmose. Vorrichtungen dieser Art, Umkehrosmose- oder RO-Anlagen, werden insbesondere in Verbindung mit Hämodialysegeräten eingesetzt, um aus Leitungswasser hochreines, keimfreies Wasser zur Bereitung der Dialysierflüssigkeit zu gewinnen.

Die EP 1 902 771 A1 offenbart eine Vorrichtung zur Wasseraufbereitung, bei der in einer Konzentratleitung ein Drosselventil angeordnet ist, das einen feststehenden Strömungswiderstand hat.

Das Umkehrosmosesystem der US 2004/0144707 A1 enthält in einer von der Konzentratrücklaufleitung abzweigenden Konzentratauslassleitung ein Steuerventil, durch das Konzentrat bei Bedarf abgeführt werden kann. Stromabwärts ist zudem ein Solenoidventil in einer weiteren von der Konzentratrücklaufleitung abzweigenden Leitung vorgesehen, das geöffnet wird, wenn ein lonensensor anzeigt, dass die Ionenkonzentration in der Konzentratleitung zu hoch ist.

Die Erfindung zielt allgemein darauf ab, einen möglichst energiesparenden Betrieb der Umkehrosmoseanlage zu erreichen.

Aufgabe der Erfindung ist es auch, die Betriebskosten dadurch zu reduzieren, dass seinerseits die im Wasser befindlichen chemischen Inhaltsstoffe, insbesondere die Kationen nicht mittels Ionentauschern durch Chloride ersetzt werden, andererseits aber auch eine chemische oder auch thermische Desinfektion insbesondere der RO Primärseite zu reduzieren bzw. auszuschließen.

Diese Aufgabe wird durch die im kennzeichnenden Teil des Hauptanspruches genannten Merkmale gelöst. Weitere Merkmale und Ausgestaltungen der Erfindung ergeben sich aus den Unteransprüchen und der nachfolgenden Beschreibung von Ausführungsbeispielen in Verbindung mit den Abbildungen. Dabei zeigen:
- Fig. 1: das Schema einer typischen Umkehrosmoseanlage nach dem Stand der Technik,
- Fig. 2: das Schema einer vergleichbaren Umkehrosmoseanlage mit Ausstattungsmerkmalen entsprechend der Erfindung,
- Fig.3/-4: das Schema zugehöriger Einrichtungen

Das Funktionsprinzip von Umkehrosmoseanlagen besteht bekanntlich darin, dass das aufzubereitende Wasser in einem Filtermodul unter hohem Druck an der Oberfläche einer semipermeablen Membran entlanggeführt wird, wobei ein Teil des Wassers, das sogenannte Permeat, durch die Membran tritt und auf der anderen Seite der Membran gesammelt und den Verbrauchsstellen zugeführt wird. Der nicht durch die Membran tretende, mit zurückgehaltenen Stoffen angereicherte Teil des Rohwassers, das sogenannte Konzentrat, fließt am Ende der Strömungsstrecke des Primärraumes aus dem Membranmodul aus.

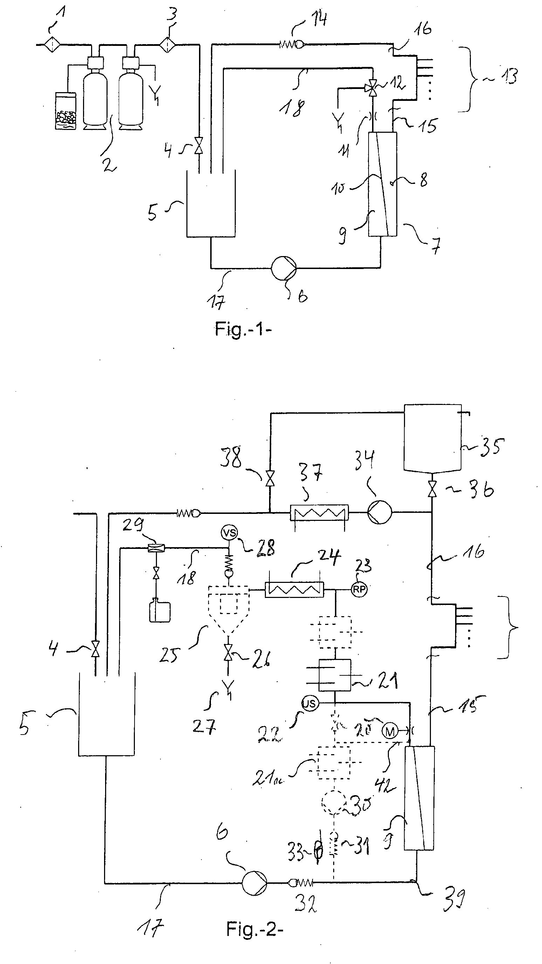

Das in Fig. 1 gezeigte Schema veranschaulicht als typisches Beispiel das Zusammenwirken wesentlicher Funktionselemente einer Umkehrosmoseanlage nach dem Stand der Technik. Das aufzubereitende Rohwasser fließt aus der zuführenden Leitung 1 und über das Ventil 4 in ein Puffergefäß 5 mit eingebauter Füllstandsregelung. Aus diesem Behälter 5 gelangt das Wasser durch die Leitung 17 über die Pumpe 6 in den Umkehrosmosefilter 7, dessen Primärraum 9 durch die semipermeable Membran 10 von dem Sekundärraum 8 getrennt ist. Aus dem Sekundärraum 8 fließt das Permeat in eine Ringleitung 15/16 von der die Verbraucherleitungen 13 abzweigen. Überschüssig erzeugtes Permeat kann am Ende der Ringleitung über ein eingefügtes Druckhalteventil 14 in das Gefäß 5 zurückfließen, wobei die Einstellung dieses Ventils den in der Ringleitung 15/16 herrschenden Druck bestimmt.

Der für die Filtration notwendige Druck im Primärraum des RO-Filters 9 wird durch die Pumpe 6 in Verbindung mit einem in die Konzentratleitung 18 stromabwärts vom Filter eingefügten Strömungswiderstand 11, z.B. in Form eines Drossel- oder eines Druckventils, erzeugt.

Für die Funktion des RO Filters 7 ist die Konzentrationsdifferenz zurückgehaltener Stoffe zwischen Auslass und Einlass des Primäraumes 9 von erheblicher Bedeutung. Bei zu hoher Konzentration insbesondere von Kalzium und Magnesium besteht ein erhöhtes Risiko, dass diese Anteile eine kritische Grenze überschreiten. Durch Bildung von Ablagerung nimmt dann die Durchlässigkeit der Membran 10 und damit der Permeatfluss ab, was einem vorzeitigen Unbrauchbarwerden des Umkehrosomosefilters entspricht.

Aufgrund dieses Sachverhaltes werden bisher unter Berücksichtigung der Rohwasserqualität insbesondere die Kalzium- und Magnesiumsalze durch vorgeschaltete Kationentauschersäulen 2 gegen Natrium ausgetauscht. Ionenaustauscher sind wartungs- u. kostenintensiv.

Zum sicheren Betrieb der Kationentauscher ist Natriumchlorid und Spülwasser erforderlich. Darüber hinaus muss regelmäßig manuell Salz nachgefüllt werden. Zusätzlich kontaminiert das salzhaltige Spülwasser die Abwässer.

Umkehrosomosen dienen insbesondere auch der Gewinnung von keimfreiem Wasser.

Der nicht durch die Membran 10 tretende, mit zurückgehaltenen chem. Wasserinhaltsstoffen und Bakterien angereicherte Teil des zugeführten Leitungswassers bildet einen Biofilm auf den Innenflächen des flüssigkeitsführenden Systems. Die Ausscheidungen des Biofilms können als Pyrogene und Endotoxine die nicht ideale Membran 10 passieren und kontaminieren den hochreinen Permeatkreislauf 15/16.

Daher ist es notwendig, an Umkehrosmosen in regelmäßigen Zeitabständen eine thermische oder chemische Desinfektion durchzuführen.

Hierzu wird der Betrieb unterbrochen und der Anlage thermische Energie oder chem. Desinfektionsmittel zugeführt.

Wegen der erheblichen Gefahren, die insbesondere mit einer chem. Desinfektion verbunden sind, müssen die Arbeitsschritte hierbei manuell überwacht werden. Das bedeutet im allgemeinen einen erheblichen Arbeitsaufwand.

Aufgabe der Erfindung ist es auch, die Betriebskosten dadurch zu reduzieren, dass einerseits die im Wasser befindlichen chem. Inhaltsstoffe, insbesondere die Kationen nicht mittels Ionentauschern durch Chloride ersetzt werden, andererseits aber auch eine chemische oder auch thermische Desinfektion insbesondere der RO Primärseite zu reduzieren bzw. auszuschließen.

Diese Aufgabe wird erfindungsgemäß wirkungsvoll dadurch gelöst, dass in den Primär-Zirkulationkreis 5/17/9/18 oder auch im erweiterten Primärkreis 1/4/5/17/9/18 die durchfließende Flüssigkeit vorzugsweise des Mischwassers oder auch des zufließenden Leitungswassers mittels elektro - magnetischem oder elektrischem Feld oder den Dissoziationskräften der Elektrolyse oder den Kavitationskräften des Ultraschall oder auch deren Kombination beeinflusst wird.

Mikroorganismen werden dabei entweder oxidiert oder durch elektrische Impulse an der Vermehrung gehindert bzw. reduziert.

Wassermoleküle sind ausgeprägte Dipole. Dadurch bestehen zwischen den Wassermolekülen Anziehungskräfte, die zur Bildung von Wasserstoffbrückenbindungen und damit zu großen Wassermolekülclustern führen. Darüber hinaus gehen eine Reihe physikalischer Theorien auch von einem Dipolelement der Elektronen aus.

Formal besteht die physikalische Kalkschutzfunktion in der Stabilisierung des im Wasser gelösten Kalkes so, dass zum einen keine großen zusammenhängenden Cluster entstehen, an deren Rändern es auf Grund der hohen Konzentrationspolarisation zu Kalkausfällungen kommen kann, und zum anderen, dass die Elektronendipole der Kristalle (Salze) so beeinflusst werden, dass sogenannte Impfkristalle entstehen, an die sich Wassermoleküle und weitere Kristalle anhängen.

Dabei werden die normalerweise großen Wassermolekülcluster mit ihrer dipolartigen elektrischen Ladung aufgebrochen und ordnen sich so, dass vorwiegend kleinste Wassermolekül-Cluster entstehen.

Wie Figur 2 zeigt, sieht die Erfindung eine Reinigungskammer 21 im Primärzirkulationskreis der Umkehrosmose vor, deren Konstruktion eine elektrische oder magnetische oder elektromagnetische oder elektrolytische oder sonographische Einwirkung oder eine Kombination verschiedener physikalischer Einwirkungen der durchfließenden Flüssigkeit zulässt und vorsieht.

Die Anwendung und der Einbauort der Reinigungskammer 21 sind jedoch nicht auf die beschriebene Funktion beschränkt.

Insbesondere die keimabtötende Wirkung der Sauerstoffradikale einer Elektrolysezelle macht eine chemische oder thermische Desinfektion überflüssig. Dabei soll kein freies Chlor erzeugt werden, weil das toxische Chlor die Membran passiert und die Membranoberfläche 10 beschädigt wird.

Die in der Flüssigkeit befindlichen Mikroorganismen werden beim Durchlauf durch die Elektrolysezelle oxidiert und dadurch geschwächt bzw. abgetötet.

Es hat sich gezeigt, dass ebenfalls eine Reduzierung von Mikroorganismen erfolgt, wenn diese starken elektrischen Impulsen oder elektromagnetischen. Feldern ausgesetzt werden.

Systematische Untersuchungen zu Ultraschall-Entkalkungsprävention oder sonochemischen Oxidationsprozessen existieren bisher nicht.

Es hat sich jedoch nach Erprobung gezeigt, dass sowohl eine Stabilisierung des Kalkes im Wasser erfolgt als auch eine Reduzierung der Mikroorganismen.

Ultraschall breitet sich in Flüssigkeiten als Longitudinalwelle aus, der phasenverschoben eine Druckwelle folgt. Durch den Wechsel von Kompressions- und Expansionsphasen kommt es zu Über- und Unterdrücken. In der Kompressionsphase wird auf die Moleküle einer Flüssigkeit ein positiver Druck ausgeübt. In der Expansionsphase ein negativer Druck, d.h. die Moleküle werden auseinander gezogen.

Für die chemischen Wirkungen von Ultraschall sind die Prozesse wichtig, die während der Implosion ablaufen. Es herrschen dabei Extrembedingungen, die chemische Reaktionen ermöglichen, welche unter normalen Bedingungen nicht stattfinden. Die Vorgänge, die während der Implosion ablaufen, sind nicht vollständig verstanden, führen aber bei Einsatz innerhalb einer RO zu den gewünschten Effekten.

Darüber hinaus ist von großem Vorteil, eine Entgasung der Flüssigkeit sonographisch, insbesondere nicht gelöster Kohlensäure, durchzuführen, weil diese die Membran passiert und zur Permeat Leitfähigkeitserhöhung beiträgt.

Bei Kombination von Ultraschall und Elektrolyse ist dabei vorteilhaft die Entkalkung der Kathoden durch den Ultraschall.

Da die Desinfektionswirkung der elektrolytisch erzeugten Sauerstoffradikale sowie die Stabilisierung der Kalkkristalle in der Flüssigkeit nach dem Abschalten der Reinigungskammer nur temporär vorhanden sind, werden vorteilhaft periodisch und oder am Ende eines Betriebszyklus die Hochdruckdrossel 20 entweder motorisch, oder falls ein fixer Strömungswiderstand eingebaut ist, mittels Bypassventil mit Abflussventil 26 geöffnet. Dadurch wird die Strömung im Primärzirkulationskreis schlagartig erhöht und die Oberflächen der Flüssigkeit führenden Komponenten schwallartig überströmt und ausgespült.

Mit Vorteil wird dabei die Depotwirkung der Sauerstoffradikale durch Messung des Redox-Potentials 23 festgestellt.

Da die Wirkung der Reinigungskammer 21 durch ihren physikalischen Effekt oder ihre Effekte auf die Kristallbildung durch den Anwender nicht unmittelbar feststellbar ist, wird mit großen Vorteil für den Primärraum eine Verkalkungsanzeige 28 vorgesehen.

Dabei können Komponenten oder flüssigkeitsführende Leitungen mittels transparenten oder transluzenten Materials ausgestaltet sein, um visuell die Verkalkung zu überprüfen. Damit ist jedoch keine qualitative Aussage über die Stärke des Niederschlags möglich.

Weitere Verkalkungs- bzw. Verunreinigungs auch mikrobiologische Verunreinigungs- sensoren bzw.-detektoren sind elektrooptische Sender-Empfänger Einheiten.

Bei einer vorteilhaften Ausgestaltung ist die Sender-Empfängereinheit auf einer Ebene angeordnet. Das opt. Sendersignal wird dabei auf eine gegenüberliegende Spiegelfläche projektiert und von dort zum opt. Empfänger zurückgestrahlt.

Die bevorzugte Lösung ist ein transparentes Rohrstück mit gegenüberliegenden Sender- Empfängersensoren. Die Quantität des Empfängersignales ist dabei eine direkte Funktion des Verschmutzungsgrades.

Bei heiß reinigbaren Anlagen mit bekannten Volumen kann die Verschmutzung auf der Heizungsoberfläche dergestalt genutzt werden, dass bei verschmutzter Heizoberfläche der Wärme- bzw. der Energieeintrag in die Flüssigkeit länger dauert, dabei kann der Energieeintrag als Maß der Verschmutzung verwendet werden.

Mit Vorteil wird bei einer Reinigungsanforderung durch den Verkalkungssensor 28 über die Wasserstrahlpumpe 29 und den Kanisteranschluss 19 bei laufender Pumpe 6 Zitronensäure oder eine andere Säure eingesaugt und durch Heizung 24 auf eine moderate Temperatur erwärmt, um sowohl die Restbakterien abzutöten und um Kristalle zu entfernen.

Vorteilhaft wird die Reinigung unterstützt und Restkristalle aufgelöst, wenn dabei der in der Rücklaufleitung 16 installierte Tank 35 das kalt- oder mittels Heizer 37 heißgelagerte Permeat mittels Pumpe 34 zum Austausch der primärseitigen Flüssigkeit der Umkehrosmose genutzt wird. Dabei wird solange Permeat zum Puffergefäss 5 geführt und mit der Pumpe 6 verteilt, bis das primärseitige Volumen der Umkehrosmose ausgetauscht und die Membranoberfäche 10 von Rückständen abgestreift ist. Anstelle des Tanks 35 und der Pumpe 34 kann auch ein Expansionsspeichergefäß mittels elastischer Membran oder vorgespanntem Balg genutzt werden.

Mit großem Vorteil kann zur Verbesserung der zeitlichen Einwirkung und Verstärkung der physikalischen Effekte eine zusätzliche Zirkulationspumpe 30 mit einer Reinigungskammer 21 a zwischen den Konzentratausgang 42 und dem Mischwassereingang 39 angeschlossen werden. Dabei kann es sich um eine zusätzliche Reinigungskammer mit einem differenten physikalischen Effekt zur Reinigungskammer 21 handeln.

Die Durchströmung des Primärraumes im Sinne einer optimalen Überströmung der Membran 10 ist dabei gewährleistet, und zwar weitgehend unabhängig von der Tätigkeit der für die Mischwasser-Zuführung, den Druckaufbau und die Zirkulationsleistung der eingesetzten Pumpe 6.

Ein weiterer wesentlicher Vorteil liegt darin, dass mit der in Fig. 2 gezeigten Anordnung eine erhebliche zusätzliche Energieersparnis erreicht wird. Da die Pumpe 6 nur Permeat- u. Abflussvolumen fördert und keine Zirkulationsleistung erbringt, kann ihre elektrische Anschlussleistung auf ca. ein Drittel reduziert werden.

Zur Überwachung des sicheren Pumpenbetriebes ist vorteilhaft ein magnetischer Flusswächter 33 mit den Rückschlagventilen 31/32 gekoppelt

Um Stoffrückstände zu entfernen besteht ein weiteres Erfindungsmerkmal darin, dass die Flüssigkeit des Primärzirkulationskreises mittels tangentialen Einlauf durch eine zylindrische Zentrifugalkammer 25 geleitet wird, an deren oberen Ende eine durch Flüssigkeitsdruck drehbare Turbinenschaufel die zu trennenden Stoffteilchen und Partikel nach unten fördert und die gereinigte Flüssigkeit durch eine Hohlwelle bzw. einen siebförmigen Zylinder nach oben weiterleitet.

Unterhalb der Zentrifugalkammer 25 befindet sich ein Sammelraum für die abzuscheidenden Stoffteilchen bzw. Kalkcluster. Bei vorhandener Zentrifugalkammer kann das Abflussventil 26 am Sammelraum befestigt sein.

Weitere Ausgestaltungen der Zentrifugalkammer 25 sind Konstruktionen wie z. B. schraubenförmig nach unten gerichtete spiralförmige Flüssigkeitsführungen.

In einer weiteren vorteilhaften Ausgestaltung ist die Zentrifugalkammer 25 ohne Turbinenschaufel mit der Reinigungskammer 21 als Einheit kombinierbar.

Die Einbaulagen der in Fig. 2 dargestellten Komponenten ist jedoch nicht auf den beschriebenen Ort beschränkt, sondern dienen zunächst der Übersicht.

Mit großem Vorteil wird auch vorgeschlagen, die Leistungsendstufen für die Ansteuerung der Reinigungskammer hinsichtlich Frequenz und Strom einstellbar zu machen und durch den Prozessor der Umkehrosmoseanlage anzusteuern und auf Störung zu überwachen. Dabei kann ein bestimmtes Bitmuster als Testsignal ausgegeben und mittels watch dog überwacht werden, wobei der jeweilige Betriebsstatus wie auch der Signalverlauf des über die Anzeigevorrichtung der Umkehrosmoseanlage angezeigt und mit Speicherbausteinen abgespeichert werden.

Mittels Schnittstelle z.B. Ethernetanschluss des Mikrocontrollers der Umkehrosmoseanlage sind die Daten jederzeit abrufbar.

Mit einem Controller und mehreren Endstufen und Reinigungskammern sind alle relevanten Strecken wie z.B. die zuführende Leitung1 oder die Leitungsstrecken 17 und oder 15/16 der Umkehrosomose oder deren Verteilungssystem auszustatten.

Dabei können auch mehrere Reinigungskammern mit gleichen oder unterschiedlichen physikalischen Effekten in Reihe oder parallel geschaltet werden.

Je nach Wasserqualität des zugeführten Leitungswassers kann durch geschickte Anordnung bzw. Ausstattung der Reinigungskammer eine gleichzeitige Entkalkung und Entkeimung durchgeführt werden.

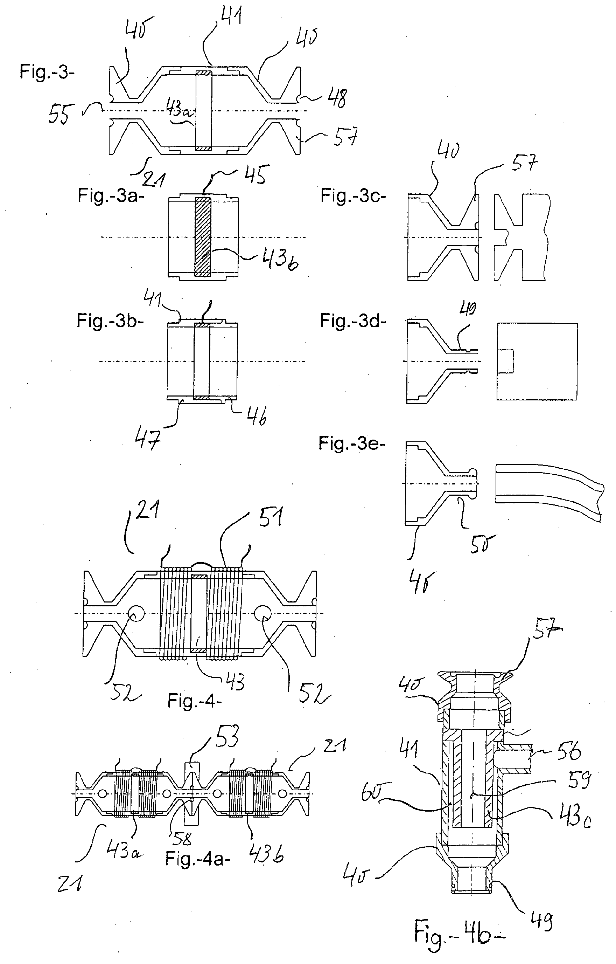

Figur 3 zeigt den Aufbau einer Reinigungszelle 21 mit 3 Elektroden, wobei die mittlere Elektrode 43 räumlich und elektrisch von den beiden Außenelektroden 40 isoliert ist. Die Flüssigkeit kann dabei bidirektional über den Strömungskanal 55 in die Zelle eingeleitet werden. Durch die große Flächenverteilung der Außenelektrode 40 wird eine gleichmäßige Potentialverteilung im Innenelektrodenraum erreicht. Das Isolierstück 41 dient als Einbauraum für die Innenelektrode 43. Die becherförmigen Außenelektroden 40 sind mit unterschiedlichen Konnektoren wie z.B. Clampanschluss 57, Stecknippelanschluss 59 oder Schlauchanschluss 50 auszustatten.

Die Innenelektrode 43 ist als ringförmiger Elektrodenkörper im Isolierstück 41 eingebracht.

Je nach Anwendung ist das Material der Außenelektroden 40 aus Edelstahl, Titan, Titanmischoxid oder gesinterter Kohle hergestellt.

Die Innenelektrode 43 besteht aus einem oxidationsstabilen Material wie z.B. leitfähigem Kohlenstoff, Titanmischoxid, einem keramischen Gemisch aus Metalloxiden, Titanoxid oder Kobalt.

Durch Materialauswahl ist es möglich, die Zelle als Elektrolysezelle oder als elektromagnetische Zelle oder als Zelle mit Elektrodenanschlüssen für Strom und Spannung auch kapazitiv zu betreiben. Vorzugsweise ein Pol der elektrischen Versorgungsanschlüsse ist an die gebrückten Außenelektroden 40 und der andere Pol an die Innenelektrode angelegt.

Bei einer Elektrolysezelle ist dabei die Innenelektrode 43 die Anode und die Außenelektrode 40 die Kathode.

Figur 3a zeigt das Isolierstück 41 mit eingebauter Innenelektrode 43b und deren Stromzuführung 45. Der Innenelektrodenraum 43b ist hierbei so ausgefüllt, dass eine größere Fläche erzielt wird, um die Verweildauer der Flüssigkeit zu vergrößern. Diese Elektrode wird bevorzugt mit gesinterter Kohle oder anderweitigen kohlenstoffhaltigen Material gefüllt, um eine anodische Entkalkung bzw. die Herstellung von Impfkristallen durchzuführen.

Figur 3b zeigt ein zweiteiliges Isolierstück 41 mit Verschraubungen 46/47. Die Isolierstückteile 41 mit ihren Innenelektroden 43 können beliebig kaskadiert und in die Außenelektroden 40 so eingesetzt werden, dass Zellen mit vier und mehr Elektroden entstehen. Dabei können die beiden Außenelektroden 40 jeweils elektrisch zusammengefasst und mit den unterschiedlichen Innenelektroden 43a und 43 b so elektrisch angeschlossen werden, dass die Innenelektroden 43a/43b getrennte Potentiale erhalten.

Das Material der Innenelektrode 43a besteht dabei aus Metallmischoxiden und das Material der Innenelektrode 43b aus gesinterter Kohle. Damit kann mit dieser Zelle über die Innenelektrode 43a eine anodische Oxidation mit Sauerstoffradikalen und über die zusätzliche Innenelektrode 43b die anodische Stabilisierung des Kalks erzielt werden.

Figur 4 zeigt den Aufbau einer kombinierten Reinigungskammer mit 3 Elektroden und einer Spulenwicklung 51. Hierbei wird die Entkalkung über die Kraftlinien des von der Spule erzeugten Magnetfeldes in der Flüssigkeit durchgeführt. Die Verwendung von teflongekapselten Ringmagneten in der Flüssigkeit oder Ringmagneten außerhalb des Isolierstückes 41 anstelle der Spulenwicklung 51 ist möglich.

Die beiden Außenelektroden 40 sind die Kathoden, die Innenelektrode 43 die Anode einer Elektrolysezelle zur Herstellung von Sauerstoffradikalen für die Inaktivierung der Mikroorganismen.

Die Ultraschallanschlüsse 52 dienen der Aufnahme von piezokeramischen Ultraschallaktoren. Die sonographische Einkopplung in die Flüssigkeit erfolgt in diesem Fall vorzugsweise über Titan oder Titanoxid der Außenelektroden 40.

Je nach Materialbestückung und Ansteuerung kann diese Zelle als elektromagnetische Zelle zur Entkalkung in Kombination mit einer Elektrolysezelle oder einer sonographischen Zelle über Anschlüsse 52 oder als kapazitive Perforationszelle über die Anschlüsse 40/43 für die Inaktivierung der Mikroorganismen kombiniert werden. Bei Betrieb als kapazitive Perforationszelle werden die Außenelektroden 40 elektrisch zusammengefasst und sind dabei mit der Innenelektrode 43 die Kondensatorplatten.

Die durch die Elektronik der RO angesteuerten Endstufen versorgen die Elektroden der Zelle mit hochfrequente Pulsen oder einer der Flüssigkeit gemäßen Frequenz-, Puls-, Signalform. Die Kombination von elektromagnetischen-, elektrolytischen- und sonographischen Effekten sind mit dieser Zelle möglich.

Figur 4a zeigt die Möglichkeit der Zusammenschaltung zweier Reinigungskammern 21 über einen Clampanschluss 53. Die Flüssigkeitsabdichtung erfolgt über einen in die Nut 48 eingelegten Dichtring 58. In diesem Fall kann die Stromzuführung der Außenelektroden 40 über den Clampanschluss 53 erfolgen. Die Kombination der Reinigungszellen erlaubt die Anwendung der vollen Bandbreite und mit allen bereits vorgenannten physikalischen Effekten auf die Flüssigkeit. Dabei können die Reinigungskammern 21 auch an unterschiedlichen Stellen der Umkehrosmose mit unterschiedlichen Effekten betrieben werden. Die Clampanschlüsse dienen gleichzeitig der mechanischen Befestigung der Reinigungszellen 21 in der Umkehrosmoseanlage.

Figur 4b zeigt den Aufbau einer vertikalen Reinigungskammer 21 in Kombination mit einer Zentrifugalkammer 25. Dabei wird die Flüssigkeit über den Anschluss 56 tangential in das Isolierstück 41 eingebracht und über den Ringspalt 60 in Richtung Anschluss 49 gefördert. Der Anschluss 40/49 ist Sammelraum für Stoffrückstände und gleichzeitig Aufnahme und Anschluss für das Abflussventil 26.

Die von Stoffrückständen befreite Flüssigkeit wird über den Innenraum 59 der rohrförmigen Innenelektrode (Anode) 43c über Anschluss 40/57 weitergeführt. Dabei sind die beiden Außenelektroden 40 zusammengefasst und bilden zusammen mit der rohrförmigen Innenelektrode 43c eine Elektrolyse- oder Perforations- oder elektromagnetische Reinigungszelle. Diese Form der Reinigungskammer wird vorteilhaft auch in die zuführende Leitung 1eingesetzt.

Es ist ebenfalls möglich, in den Innenraum der Reinigungskammer ein Diaphragma einzusetzen, welches selektiv und rückstandfrei toxische Wasserinhaltsstoffe zurückhält. Der Aufbau und die Anordnung sind jedoch nicht auf die beschriebenen Funktionen und Vorrichtungen begrenzt.

Eine spezielle Variante einer Reinigungszelle (nicht abgebildet) beruht darauf, dass Außen- u. Innenelektroden durch eine poröse Wand eines Diaphragma getrennt werden. Das Diaphragma ist dabei nur für spezielle Ionen-durchlässig und sorgt dafür, dass z.B. giftige Stoffe im Anodenraum zurückbleiben und damit die Membran nicht passieren, z.B. lonentauscherharz.

Eine andere spezielle Variante ist der Aufbau einer Reinigungszelle mit Katalysator zur Beseitigung oder Abbau der durch die Oxidierung entstandenen organisch chem. Rückstände oder auch des Wasserstoffs.

Es wird betont, dass die Erfindung nicht auf die beschriebenen und dargestellten Ausführungsformen beschränkt ist. Vielmehr sind alle offenbarten Merkmale der drei Ausführungsformen auch einzeln untereinander anders als oben beschrieben miteinander kombinierbar.

Die Erfindung wird jedoch durch die nachstehenden Ansprüche definiert.

| | |
|---|---|
| 1. | Zuführende Leitung mit Filter |
| 2. | Kationentauscher |
| 3. | Feinfilter |
| 4. | Ventil |
| 5. | Vorlaufbehälter |
| 6. | Pumpe |
| 7. | Umkehrosmose Filter |
| 8. | Sekundärraum |
| 9. | Primärraum |
| 10. | Membran |
| 11. | Strömungswiderstand |
| 12. | Ventil |
| 13. | Verbraucheranschlüsse |
| 14. | Druckhalteventil |
| 15. | Zu führende Permeatleitung |
| 16. | Rückführende Permeatleitung |
| 17. | Saugleitung |
| 18. | Konzentratleitung |
| 19. | kanisteranschluss |
| 20. | Motorischer Flusswiderstand oder Bypassventil |
| 21. | Reinigungskammer |
| 22. | Ultraschallsensor |
| 23. | Redox Messung |
| 24. | Heizer |
| 25. | Zentrifugalkammer |
| 26. | Abflussventil |
| 27. | Abfluss |
| 28. | Verkalkungsensor |
| 29. | Pumpe |
| 30. | Zirkulationspumpe |
| 31. | Entkopplungsventil |
| 32. | Entkopplungsventil |
| 33. | Reedkontakt |
| 34. | Heizungspumpe |
| 35. | Heisswasseraufbereitung |
| 36. | Tankventil |
| 37. | Heizer |
| 38. | Tankventil |
| 39. | Mischwassereingang |
| 40. | Kathodenanschlüsse (Stromzuführungen) |
| 41. | Isolierstück |
| 42. | Konzentratausgang |
| 43. | Anodenanschluss (Mittelelktrode) |
| 44. | Gefüllter Anodenraum |
| 45. | Stromzuführung Anode (Mittelelelektrode) |
| 46. | Isolierstück Teil 1 |
| 47. | Isolierstück Teil 2 |
| 48. | Dichtringsitz |
| 49. | Stecknippelanschluss |
| 50. | Schlauchanschlusstülle |
| 51. | Spulenwicklung |
| 52. | Ultraschallanschlüsse |
| 53. | Clampverbindung |
| 54. | |
| 55. | Strömungskanal |
| 56. | Seitlicher Anschluss |
| 57. | Clamp-Anschluss |
| 58. | Dichtung |
| 59. | Rohrförmige Innenelektrode |
| 60. | Ringspalt |

## Patentansprüche

1. Vorrichtung zur Erzeugung von Reinstwasser nach dem Prinzip einer umgekehrten Osmose mit einer zuführenden Leitung (1) für aufzubereitendes Rohwasser, einem Ventil (4), einem Puffergefäß (5) mit eingebauter Füllstandsregelung, einer zu einem Primärraum (9) eines Umkehrosomosefilters (7) führenden Leitung (17), die eine Pumpe (6) enthält, wobei der Umkehrosmosefilter (7) durch eine RO Membran (10) in den Primärraum (9) und einen Sekundärraum (8) unterteilt ist, sowie mit einem stromabwärts der RO-Membran (10) in der Konzentratleitung (18) für den Druckaufbau im Primärraum (9) erforderlichen Drosselventil (11), und einem Abflussventil (26), **dadurch gekennzeichnet,**
**dass** sich in dem Primärkreis (1, 4, 5, 17, 9, 18) mindestens eine Reinigungskammer (21) mit kapazitiven und/oder elektromagnetischen Einrichtungen für eine Entkalkung befindet und
**dass** das Drosselventil (11) mit einem Motor versehen ist oder das Drosselventil einen feststehenden Strömungswiderstand hat und ein BypassVentil angeordnet ist, so dass die Strömung in dem Primärkreis schlagartig erhöht und die Flüssigkeit führenden Komponenten schwallartig ausgespült werden können.

2. Vorrichtung nach Anspruch 1,
**dadurch gekennzeichnet,**
**dass** ein Teilstrom des Primärkreises über eine Zirkulationspumpe (30) nur über die Membran (10) und eine Reinigungskammer (21) zirkuliert.

3. Vorrichtung nach Anspruch 1 oder 2,
**dadurch gekennzeichnet,**
**dass** die Reinigungskammer (21) drei Elektrodenanschlüsse hat.

4. Vorrichtung nach einem der Ansprüche 1 bis 3,
**dadurch gekennzeichnet,**
**dass** die Reinigungskammer (21) mit einer Spule (1) zur Erzeugung eines Magnetfeldes versehen ist.

5. Vorrichtung nach einem der Ansprüche 1 bis 4,
**dadurch gekennzeichnet,**
**dass** zwei oder mehr Reinigungskammern (21) in Reihe oder parallel geschaltet sind.

6. Vorrichtung nach einem der Ansprüche 1 bis 5,
ferner **gekennzeichnet durch**,
einen optischen oder optoelektronischen Verkalkungssensor (28).

7. Vorrichtung nach einem der Ansprüche 1 bis 6,
**dadurch gekennzeichnet,**
**dass** eine Reinigungskammer zur elektrolytischen Ozon-Erzeugung in den Permeatkreis (15,16) eingesetzt ist.

## Claims

1. Apparatus for producing ultrapure water on the reverse osmosis principle, having a supply line (1) for raw water to be treated, a valve (4), a buffer vessel (5) with an in-built fill-level controller, a line (17), which includes a pump (6), leading to a primary space (9) of a reverse osmosis filter (7), wherein the reverse osmosis filter (7) is divided by an RO membrane (10) into the primary space (9) and a secondary space (8), and having, downstream of the RO membrane (10) in the concentrate line (18), a throttle valve (11) necessary for the pressure build-up in the primary space (9), and having a discharge valve (26),
**characterised in that**
situated in the primary circuit (1, 4, 5, 17, 9, 18) there is at least one purification chamber (21) with capacitive and/or electromagnetic devices for decalcification, and
the throttle valve (11) is provided with a motor or the throttle valve has a fixed flow resistance and a bypass valve is arranged so that the flow in the primary circuit increases abruptly and the components conducting the liquid can be surge-flushed.

2. Apparatus according to claim 1,
**characterised in that**
a sub-flow of the primary circuit circulates, by way of a circulation pump (30), only via the membrane (10) and a purification chamber (21).

3. Apparatus according to claim 1 or 2,
**characterised in that**
the purification chamber (21) has three electrode connections.

4. Apparatus according to any one of claims 1 to 3,
**characterised in that**
the purification chamber (21) is provided with a coil (1) for generating a magnetic field.

5. Apparatus according to any one of claims 1 to 4,
**characterised in that**
two or more purification chambers (21) are connected in series or in parallel.

6. Apparatus according to any one of claims 1 to 5, further **characterised by**
an optical or optoelectronic calcification sensor (28).

7. Apparatus according to any one of claims 1 to 6,
**characterised in that**
a purification chamber for electrolytic ozone generation is installed in the permeate circuit (15, 16).

## Revendications

1. Dispositif pour produire de l'eau ultrapure d'après le principe d'une osmose inverse avec une conduite d'amenée (1) pour l'eau brute à traiter, une vanne (4), une cuve tampon (5) avec un régulateur de niveau intégré, une conduite (17) menant à une chambre primaire (9) d'un filtre d'osmose inverse (7) et contenant une pompe (6), dans lequel le filtre d'osmose inverse (7) est subdivisé par une membrane OR (10) en la chambre primaire (9) et une chambre secondaire (8), ainsi qu'avec une vanne d'étranglement (11) située en aval de la membrane OR (10) dans la conduite de concentré (18), nécessaire pour la montée en pression dans la chambre primaire (9), et une vanne d'évacuation (26), **caractérisé en ce que**
au moins une chambre de purification (21) avec des dispositifs capacitifs et/ou électromagnétiques pour un adoucissement se trouve dans le circuit primaire (1, 4, 5, 17, 9, 18) et
la vanne d'étranglement (11) est pourvue d'un moteur ou la vanne d'étranglement a une résistance au courant fixe et une vanne de dérivation est disposée de telle sorte que le courant augmente soudainement dans le circuit primaire et que les composants conduisant le liquide puissent être rincés par jets.

2. Dispositif selon la revendication 1, **caractérisé en ce que**
un flux partiel du circuit primaire circule seulement sur la membrane (10) et une chambre de purification (21) par le biais d'une pompe de circulation (30).

3. Dispositif selon la revendication 1 ou 2, **caractérisé en ce que**
la chambre de purification (21) a trois connexions d'électrodes.

4. Dispositif selon l'une des revendications 1 à 3, **caractérisé en ce que**
la chambre de purification (21) est pourvue d'une bobine (1) pour la production d'un champ magnétique.

5. Dispositif selon l'une des revendications 1 à 4, **caractérisé en ce que**
les deux chambres de purification (21) ou plus sont montées en série ou en parallèle.

6. Dispositif selon l'une des revendications 1 à 5, **caractérisé en outre par**
un capteur de dépôt calcaire (28) optique ou optoélectronique.

7. Dispositif selon l'une des revendications 1 à 6, **caractérisé en ce que**
une chambre de purification est utilisée pour la production électrolytique d'ozone dans le circuit de perméat (15, 16).
